(19) Europäisches Patentamt
European Patent Office
Office européen des brevets

(11) **EP 1 817 496 B1**

(12) **EUROPÄISCHE PATENTSCHRIFT**

(45) Veröffentlichungstag und Bekanntmachung des Hinweises auf die Patenterteilung:
**02.10.2013 Patentblatt 2013/40**

(21) Anmeldenummer: **05808641.4**

(22) Anmeldetag: **22.11.2005**

(51) Int Cl.:
***F03D 7/04*** *(2006.01)*

(86) Internationale Anmeldenummer:
**PCT/EP2005/012489**

(87) Internationale Veröffentlichungsnummer:
**WO 2006/056404 (01.06.2006 Gazette 2006/22)**

(54) **VERFAHREN ZUM OPTIMIEREN DES BETRIEBS VON WINDENERGIEANLAGEN**

METHOD FOR OPTIMISING THE OPERATION OF WIND FARMS

PROCEDE POUR OPTIMALISER LE FONCTIONNEMENT D'INSTALLATIONS D'ENERGIE EOLIENNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.11.2004 DE 102004056254**

(43) Veröffentlichungstag der Anmeldung:
**15.08.2007 Patentblatt 2007/33**

(73) Patentinhaber: **REpower Systems SE**
**22297 Hamburg (DE)**

(72) Erfinder: **WEITKAMP, Roland**
**49191 Belm (DE)**

(74) Vertreter: **Glawe, Delfs, Moll**
**Patent- und Rechtsanwälte**
**Rothenbaumchaussee 58**
**20148 Hamburg (DE)**

(56) Entgegenhaltungen:
**DE-A1- 10 137 272    US-A- 4 683 718**

**Beschreibung**

Die Erfindung betrifft ein Verfahren zum Optimieren des Betriebs von Windenergieanlagen, die einen Rotor, einen damit angetriebenen Generator zur Erzeugung elektrischer Energie und eine Steuerung umfassen, wobei die Steuerung die Windenergieanlage anhand eines Satzes von Betriebsparametern betreibt, und eine zweite Windenergieanlage als Referenz-Windenergieanlage verwendet wird.

Die Erzeugung elektrischer Energie aus Windkraft gewinnt zunehmend an wirtschaftlicher Bedeutung. Es werden daher Maßnahmen zur Steigerung des Ertrags gesucht. Dazu gehören neben der Wahl eines günstigen Standorts für die Windenergieanlage und der Auswahl eines für den Standort geeigneten Typs auch die Wahl richtiger Betriebsparameter. Dies ist gerade bei modernen Windenergieanlagen von großer Bedeutung, da es sich um komplexe Gebilde handelt, die mit Hilfe einer aufwendigen Steuerung betrieben werden. Sie bietet eine Vielzahl von einstellbaren Parametern, die zur Erzielung eines möglichst hohen Ergebnisses optimal einzustellen sind. Ein günstiges Betriebsergebnis bedeutet hierbei aber nicht allein, möglichst viel elektrische Energie zu erzeugen, sondern das bezieht sich auch auf andere Aspekte, wie eine möglichst geringe Geräuschemission, geringe Belastungen des Antriebsstrangs beziehungsweise der gesamten Struktur der Windenergieanlage oder auch im Hinblick auf eine gute Netzverträglichkeit. Um eine möglichst gute Einstellung der Parameter für den Betrieb der Windenergieanlage zu finden, werden zur Verbesserung von aus praktischen Erfahrungen gewonnenen Werten Optimierungsverfahren eingesetzt.

Aus der DE-A-101 27 451 ist es bekannt, Parametervariationen zum Auffinden eines Optimalwerts durchzuführen. Das Verfahren basiert auf der Idee, einen Parameter mittels eines Zeitgebers innerhalb vorgebbarer Grenzwerte zu variieren, bis ein Optimalwert gefunden ist. Ein Nachteil dieser Methode besteht darin, dass mit ihr häufig nur ein lokales anstelle eines globalen Optimums ermittelt wird. Weiter weist die Methode den Nachteil auf, dass sie nicht zwischen stochastischen Schwankungen aufgrund geänderter Umgebungsparameter, insbesondere in Windstärke und -richtung, und echten Verbesserungen aufgrund geänderter Parame-tereinstellung unterscheiden kann. Die Methode liefert daher nicht immer befriedigende Ergebnisse. Zudem ist das Verfahren verhältnismäßig langsam.

Die DE-A-101 37 272 betrifft ein SODAR-System (Sonic Detection and Ranging), das an der Gondel einer Windenergieanlage angeordnet wird. Mit dem SODAR-System können die Windverhältnisse vor der Windenergieanlage drei dimensional bestimmt werden. Damit können Böen vor ihrem Auftreffen auf die betreffende windenergieanlage erkannt werden und Maßnahmen zur Vermeidung von Schäden durchgeführt werden. Weiter wird vorgeschlagen bestehende Anemometer und Belastungsmesseinrichtungen zu verwenden, um Windenergieanlagen, die in Windrichtung hinter der Messeinrichtung angeordnet sind, mit den Messdaten zu versorgen. Damit können die Betriebsparameter dieser Windenergieanlagen frühzeitig an die Windparameter angepasst werden. Nachteilig an beiden Verfahren ist, dass stochastische Schwankungen der Windparameter nicht erkannt werden können. Weiter wird keine Optimierung der Betriebsparameter erzielt.

Aus der US-A-4 683 718 ist eine Steuerung für Schaufelräder einer Turbine für einen Staudamm bekannt. Der Staudamm weist dabei mindestens eine Turbine verstellbaren Turbinenflügeln und weitere  nicht verstellbare Turbinen auf. Mit Hilfe einer Überwachung des Wasserspiegels des Stausees und der Turbine mit den verstellbaren Turbinenflügeln wird die optimale Anzahl der zu betreibenden Turbinen bestimmt. Dazu wird die verstellbare Turbine kontrolliert geöffnet. Wenn bei voller Öffnung der Wasserspiegel steigt, wird sie wieder verschlossen und eine nicht verstellbare Turbine wird zugeschaltet. Dieser Vorgang wird so lange wiederholt, bis der Wasserspiegel sich nicht weiter ändert. Nachteil dieses Verfahrens ist, dass es verhältnismäßig langsam ist und das stochastische Schwankungen der Parameter nicht erkannt werden.

Der Erfindung liegt die Aufgabe zugrunde, ein Verfahren der eingangs genannten Art dahingehend zu verbessern, dass eine Optimierung schneller und zuverlässiger durchgeführt werden kann.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einem Verfahren zum Optimieren des Betriebs von Windenergieanlagen, die jeweils einen Rotor, einen damit angetriebenen Generator zur Erzeugung elektrischer Energie und eine Steuerung umfassen, welche die jeweilige Windenergieanlage anhand eines Satzes von Betriebsparametern betreibt, und eine der Windenergieanlagen als Ziel-Windenergieanlage und eine zweite der Windenergieanlagen als Referenz-Windenergieanlage verwendet wird, vorgesehen, die zu optimierende Ziel-Windenergieanlage zuerst mit einem ersten Satz von Parametern und danach mit einem vom ersten Satz abweichenden zweiten Satz von Parametern zu  betreiben, Zielgrößen der Ziel-Windenergieanlage, wobei die Zielgrößen Systemvariablen sind, und Referenzergebnisse der Referenz-Windenergieanlage jeweils für beide Sätze von Betriebs-parametern zu erfassen, die Zielgrößen durch Berechnen eines Gütemaßes, insbesondere den über einen wählbaren Zeitraum bestimmten Energieertrag, unter Berücksichtigung der Referenzergebnisse automatisiert auszuwerten und den Satz von Parametern mit dem besseren Gütemaß automatisiert zu bestimmen.

Die Erfindung beruht auf dem Gedanken, sich bei der Optimierung des Betriebsergebnisses nicht allein auf die zu optimierende Windenergieanlage (Ziel- Windenergieanlage) zu beschränken, sondern das Ergebnis von Veränderungen der Betriebsparameter automatisiert anhand einer Referenzanlage zu beurteilen. Vorzugsweise ist diese Referenzanlage in räumlicher Nähe angeordnet, beispielsweise handelt es sich um eine Nachbaranlage; unbedingt erforderlich ist die räumliche Nähe aber nicht. Bei der Auswahl der Referenz- Windenergieanlage kommt es vielmehr darauf an, dass insgesamt möglichst vergleichbare Bedingungen herrschen, wobei Identität der Verhältnisse aber nicht erforderlich ist. Eine besondere Rolle kommt hierbei den Windverhältnissen und den dadurch bewirkten Anströmbedingungen an dem Rotor der Windenergieanlagen zu. Bekanntlich weht der Wind meist nicht gleichmäßig, sondern schwankt. Diese Schwankungen sind in der Regel stochastisch und beziehen sich auf alle Parameter der Windes, z. B. Windgeschwindigkeit, -richtung, Böenfaktor, Turbulenzverhältnisse etc. Aufgrund dieser Schwankungen des Windes wird das Vergleichen von nacheinander erfolgenden Messungen erschwert, und zwar bis hin zur Undurchführbarkeit. Klassischerweise begegnet man dieser unausweichlichen Stochastik des Windes durch lange Messzeiten, um so eine Mittelung zu erreichen. Eine Optimierung kann auf diese Weise nur langsam erfolgen.

Hier setzt die Erfindung an. Die Erfindung sieht vor, die Stochastik des Windes nicht wie bisher als unerwünscht zu bekämpfen und dafür lange Messzeiten in Kauf zu nehmen, sondern gemäß der Erfindung wird die Stochastik akzeptiert und zur Beschleunigung des Optimierungsverfahrens verwendet. Die Erfindung erreicht dies, indem sie nacheinander die Ziel-Windenergieanlage mit zwei voneinander verschiedenen Sätzen von Betriebsparametern betreibt und die sich dabei einstellenden Betriebsergebnisse, allgemeiner ausgedrückt Zielgrößen, erfasst. Dasselbe geschieht in Bezug auf die Referenz-Windenergieanlagen, nur dass bei ihnen die Betriebsparameter nicht geändert zu werden brauchen. Es genügt, deren Referenzergebnisse parallel zu denen der Ziel-Windenergieanlagen zu erfassen.

Die Erfindung macht sich die Erkenntnis zu Nutze, dass die Ziel- und Referenzanlage in ähnlicher Weise von zufälligen Änderungen, wie beispielsweise ein Schwanken der Windgeschwindigkeit oder Windrichtungsänderungen, betroffen sind. Dadurch hervorgerufene Leistungsänderungen betreffen also die Ziel- und Referenz-Windenergieanlage gleichermaßen, und werden daher nicht berücksichtigt. Änderungen des Betriebsergebnisses, die auf einer Änderung der Betriebsparameter beruhen, wirken sich hingegen bei der Ziel- und der Referenz-Windenergieanlage unterschiedlich aus. Die Erfindung hat erkannt, dass in den Schwankungen bei den Betriebsergebnissen der Referenzanlagen ein einfach zu erlangendes Maß für die Stochastik des Windes liegt, und dass damit eine Validierung des Gütemaßes erfolgen kann. Damit ist eine schnelle und automatisch erfolgende Unterscheidung ermöglicht, ob Änderungen (z. B. Gewinne) tatsächlich auf dem veränderten Satz von Betriebsparametern beruhen oder ob sie doch nur der Stochastik des Windes zu verdanken sind. Im erstgenannten Fall kann das Ergebnis für die Optimierung verwendet werden, im zweitgenannten Fall wird es verworfen. Die Erfindung ermöglicht es damit, auch ohne lange Messzeiten auf automatisierte Weise eine Aussage über die Wirkung von Änderungen der Betriebsparameter auf die erreichten Zielgrößen (insbesondere Betriebsergebnisse) zu treffen. Sie vereinigt damit die Vorzüge eines langdauernden Mittelungsverfahrens hinsichtlich Unterscheidbarkeit von echten Änderungen aufgrund Parameteränderungen von unechten aufgrund der Stochastik des Windes einerseits mit denen eines schnellen Optimierungsverfahrens ohne Berücksichtigung der Stochastik hinsichtlich der Optimierungsgeschwindigkeit andererseits. Mit den so optimierten Satz von Betriebsparametern kann dann die Ziel-Windenergieanlage betrieben werden. Dadurch, dass das erfindungsgemäße Verfahren wenig anfällig für zufällige Veränderungen ist, kann die Zeitdauer für die Durchführung des Optimierungsverfahrens verkürzt werden. Das erfindungsgemäße Verfahren ist schnell durchzuführen und führt auch bei großen Windparks mit vielen Windenergieanlagen schnell zu einem optimalen Betriebsergebnis.

Die schnelle Durchführbarkeit ist insbesondere ein Verdienst der Automatisierung. Sie ermöglicht es, dass Verfahren nicht nur schnell, sondern auch häufig durchzuführen. Eine häufige Durchführung des erfindungsgemäßen Optimierungsverfahrens bietet Gewähr dafür, dass die bearbeiteten Windenergieanlagen nahezu die ganze Zeit mit ihrem Optimalwert betrieben werden. Das ist insbesondere in solchen Situationen von Vorteil, wenn starke stochastische Schwankungen bei den Windbedingungen auftreten. Die Erfindung stellt ein verhältnismäßig einfaches Verfahren bereit, das sich dank seiner Automatisierung zur häufigen Durchführung gerade auch unter solchen Bedingungen empfiehlt.

Nachfolgend seien einige verwendete Begriffe erläutert:

Unter Betriebsparameter wird ein das Systemverhalten beeinflussender Koeffizient oder Parameter des Systems verstanden. Es kann sich dabei um einen solchen des mechanischen oder des elektrischen Systems, oder um einen solchen der Steuerungs- und Regelungseinrichtung handeln.

Die zu optimierende Zielgröße ist eine Systemvariable. Sie ergibt sich als Folge anderer Variablen und Parameter. So umfasst der Begriff auch das Betriebsergebnis der Windenergieanlage, mithin die abgegebene elektrische Energie oder Leistung. Weitere Beispiele für die zu optimierende Zielgröße sind Geräuschemission der Windenergieanlage, Netzverträglichkeit der erzeugten elektrischen Energie, Anlagenbelastung insbesondere durch Biege- und/oder Vibrationslasten sowie Schwingungsverhalten. Der Begriff "Referenzergebnis" entspricht in seiner Bedeutung dem Begriff "Betriebsergebnis". Es ist nicht erforderlich, dass "Betriebsergebnis" und "Referenzergebnis" stets identische Parameter sind.

Zweckmäßigerweise wird als zu optimierende Zielgröße die von der Ziel-Windenergieanlage abgegebene elektrische Leistung verwendet, und als Gütemaß wird der über einen wählbaren Zeitraum bestimmte Energieertrag verwendet. Auf diese Weise können die für einen wirtschaftlichen Betrieb der Windenergieanlage besonders wichtigen Parameter Leistung und Energie der Optimierung zugrunde gelegt werden. Als zu variierender Betriebsparameter wird vorzugsweise ein Blattwinkel der Rotorblätter, eine Drehzahl-Drehmomentkennlinie des Generators und/oder ein Offset eines Windrichtungssensors verwendet. Bei dem Blattwinkel handelt es sich um den Einstellwinkel der einzelnen Rotorblätter zur Rotorebene, wobei insbesondere auch an die Optimierung der individuellen Blattwinkel der in der Regel drei Rotorblätter gedacht ist. Mittels der Drehzahl-Drehmomentkennlinie wird im Teillastbereich anhand einer Schnelllaufzahl die optimale Drehzahl des Rotors bestimmt. Bei dem Offset des Windrichtungssensors handelt es sich um einen Wert für die Ablage des Sensors von seiner Sollrichtung. Sie resultiert daraus, dass die Kalibrierung des Windrichtungssensors nur mit endlicher Genauigkeit erfolgen kann, und in der Praxis mit einer Ungenauigkeit zu rechnen ist, die einige Grad erreichen kann. Zusätzlicu befindet sich der Windsensor in einem Bereich, der von Verwirbelungen durch den Rotor betroffen ist. Dadurch kommt es zu Fehlmessungen. Wird die Windenergieanlage mittels einer Nachführeinrichtung auf Basis von Signalen des Windrichtungssensors ausgerichtet, so pflanzt sich der durch den Offset bedingten Fehler fort. Um diesen Fehler zu minimieren bzw. den Betrieb der Windenergieanlage zu optimieren, kann das erfindungsgemäße Verfahren mit Vorteil herangezogen werden.

Gemäß einer bevorzugten Ausführungsform werden die Betriebsparameter der Referenzanlage nicht verändert. Das hat den Vorteil, dass ein aktiver Zugriff auf die ReferenzWindenergieanlage nicht erforderlich ist. Außerdem wird so sichergestellt, daß Veränderungen der Zielgröße durch Windschwankungen nicht mit Veränderungen durch eine Variation der Betriebsparameter vermischt werden. Damit ist es ermöglicht, auch "fremde" Windenergieanlagen als Referenz-Windenergieanlagen zu verwenden, die nicht zum eigenen Windpark gehören. Weiter ist es damit ermöglicht, mit mehreren zu optimierenden Ziel-Windenergieanlagen gleichzeitig auf die Referenz-Windenergieanlage zuzugreifen, ohne dass es zu Konflikten auf Grund unterschiedlicher Parametervariationen kommen kann.

Vorzugsweise umfasst das Validieren ein Abfragen einer Evaluierungsmatrix, in der eine Mehrzahl von anderen Windenergieanlagen enthalten ist, die als Referenz-Windenergieanlagen vorgesehen sind. Eine solche Evaluierungsmatrix ist insbesondere für eine Optimierung einer größeren Anzahl von Windenergieanlagen von Vorteil, wie zum Beispiel bei der Optimierung von ganzen Windparks. In der Evaluierungsmatrix sind Informationen über das Verhältnis von Ziel- zu Referenzwindenergieanlage enthalten. Sie ermöglichen es, Veränderungen der Zielgrößen der ReferenzWindenergieanlage in Veränderungen der Zielgröße der Ziel-Windenergieanlage umzurechnen, beispielsweise durch Berücksichtigung von unterschiedlichen Leistungskurven von Ziel-und Referenz-Windenergieanlage. Weiterhin werden die abgelegten Informationen zur Bestimmung einer Validierungsschwelle herangezogen, bis zu der die Daten der Referenz-Windenergieanlage angenommen und jenseits der sie verworfen werden. So kann vorgesehen sein, dass bei identischen Windenergieanlagen in enger räumlicher Nähe ein schärferer Maßstab auf die Validierung anzuwenden als bei einer nur ähnlichen Referenz-Windenergieanlage, die auch noch in gewisser Entfernung steht. Allerdings muss ein weiterer Validierungsmaßstab durch einen längeren Messzeitraum bzw. durch die Auswertung einer Mehrzahl von Messzeiträumen, also auf statistischem Wege, kompensiert werden, um Ergebnisse gleicher Qualität zu erzielen. In einer einfachen Evaluierungsmatrix können diese Verhältnisse summarisch durch einen skalaren Koppelwert ausgedrückt sein. - Vorzugsweise ist die Evaluierungsmatrix aber so aufgebaut, dass sie als Elemente Vektoren aufweist. Diese enthalten Werte für verschiedene intrinsische und extrinsische Bedingungen, die bei der Verknüpfung einer Referenz-Windenergieanlage mit einer bestimmten Ziel-Windenergieanlage zu beachten sind. Damit ergeben sich zusätzliche Möglichkeiten zur verfeinerten Auswertung. Außerdem vereinfacht sich die Darstellung und mathematische Auswertung. Eine solche Evaluierungsmatrix eignet sich damit besonders für eine Automatisierung.

Zweckmäßigerweise werden bei der Durchführung der Validierung der Referenz-Windenergieanlage sowohl statische wie auch dynamische Bedingungen berücksichtigt. Zu den statischen zählen insbesondere die vorgenannten intrinsischen Bedingungen, aber auch einige weitere, wie der Aufstellungsort sowie deren Umgebungsverhältnisse. Zu den dynamischen Bedingungen gehören insbesondere solche, die mit den herrschenden Wetterverhältnisses zu tun haben. Dies betrifft insbesondere die Windparameter (Windstärke und -richtung). Beispielsweise dient die Windrichtung dazu, Windenergieanlagen auszuschließen, die in Windrichtung vor oder hinter der zu optimierenden Zielanlage liegen. Andernfalls bestünde die Gefahr, dass die Referenzanlage aufgrund von Wechselwirkungen mit der zu optimierenden Ziel-Windenergieanlage beeinflusst wäre. Solche Wechselwirkungen treten insbesondere im Vor- und Nachlauf entlang der jeweiligen Windrichtung auf. Dies kann zur Folge haben, dass bei in Reihe stehenden Windenergieanlagen das erfindungsgemäße Verfahren zwar bei den meisten Windrichtungen durchgeführt werden kann, nicht aber dann, wenn der Wind entlang der durch die Reihe festgelegten Richtung weht. In einem solchen Fall würde das erfindungsgemäße Verfahren vorzugsweise die Optimierung unterdrücken, bis der Wind aus einer günstigeren Richtung weht. Damit werden Verfälschungen vermieden.

Zweckmäßigerweise werden bei der Bestimmung der Referenz-Windenergieanlagen intrinsische Bedingungen herangezogen. Unter intrinsischen Bedingungen werden solche Charakteris-tiken verstanden, die in der Windenergieanlage selbst begründet sind. Dazu zählen zum Beispiel der Maschinentyp des Generators, das für die Windenergieanlage verwendete Regelungskonzept, die Rotorkonstruktion (Festdrehzahl oder drehzahlvariabl), Rotorblatttyp und Anlagengröße. Es ist aber nicht erforderlich, dass lediglich eine in dieser Hinsicht identische Windenergieanlage als Referenz-Windenergieanlage bestimmt wird. In der Regel wird es genügen, eine ähnliche Anlage als Referenz-Windenergieanlage zu bestimmen.

Weiter ist es zweckmäßig wenn bei der Bestimmung der Referenz-Windenergieanlage extrinsische Bedingungen herangezogen werden. Dazu zählen insbesondere solche Faktoren, welche die Wechselwirkung der Windenergieanlage mit der Umwelt beschreiben. Dazu zählen unter anderem der Aufstellungsort und -höhe sowie die Lage in Bezug auf Hindernisse, welche die Windanströmung für die jeweilige Windenergieanlage beeinflussen. Als Hindernisse sind hierbei nicht nur natürliche Gestaltungen, wie Hügel oder Wälder anzusehen, sondern auch künstliche Strukturen einschließlich in der Nachbarschaft aufgestellte Windenergieanlagen, da auch sie je nach Windrichtung strömungsbeeinflussend wirken.

Vorzugsweise wird das Variieren von Betriebsparametern und Erfassen der Zielgrößen so lange wiederholt, bis eine vorgebbares Abbruchkriterium $\varepsilon$ erreicht ist. Zweckmäßigerweise steht $\varepsilon$ hierbei für einen Differenzbetrag des Gütemaßes. Liegt dieser Betrag unter einer einstellbaren Schwelle, so kann das Optimierungsverfahren für diese Referenz-Windenergieanlage beendet werden. Es versteht sich, dass es nicht unbedingt erforderlich ist, aufwendige Gütemaße für das Abbruchkriterium heranzuziehen. Es kann auch ein einfaches Gütemaß vorgesehen sein. In Betracht kommen hier beispielsweise 10-Minuten-Mittelwerte.

Vorzugsweise ist die Verwendung einer Korrekturmatrix $\underline{K}$ vorgesehen. In der Korrekturmatrix sind für die einzelnen Kombinationen von Ziel- und Referenz-Windenergieanlagen Korrekturwerte enthalten. Damit ist es ermöglicht, Unterschiede zwischen den verschiedenen Windenergieanlagen rechnerisch zu berücksichtigen. Vorzugsweise ist die Korrekturmatrix adaptiv ausgebildet. Das bedeutet, dass mittels eines selbstlernenden Algorithmus die einzelnen Werte der Korrekturmatrix selbsttätig angepasst werden. Dadurch werden Veränderungen, die sich über einen längeren Betrieb der einzelnen Windenergieanlagen ergeben können, automatisch berücksichtigt.

Es bedarf nach vorstehenden Erläuterungen keiner näheren Erläuterung, dass schon allein - aber nicht nur - wegen der schwankenden Natur des Windes die Bestimmung einer geeigneten Referenzanlage nicht in vorher festgelegter Weise erfolgen kann, sondern stets nur anhand der jeweils herrschenden Umgebungsbedingungen mit Erfolg vorgenommen werden kann. Grundsätzlich kann diese Bestimmung vom Betriebspersonal vorgenommen werden. Um den Betreiber und sein Personal aber von dieser Bestimmung zu entlasten, ist gemäß einem weiteren Aspekt der Erfindung, für den ggf. unabhängiger Schutz gesucht wird, vorgesehen, diese Bestimmung automatisch durchzuführen.

Bei einer bevorzugten Ausführungsform werden mehrere Windenergieanlage zu einer Gruppe von Ziel-Windenergieanlagen und/oder Referenz-Windenergieanlagen bestimmt. So kann beispielsweise bei einer quer zur Windrichtung stehenden Reihe von mehreren Windenergieanlagen jede zweite Anlage eine Ziel-Windenergieanlage sein, bei der der variierte Satz von Betriebsparametern verwendet wird. Dies hat nicht nur den Vorteil, dass mehrere Ziel-Windenergieanlagen auf einmal optimiert werden können. Ein weiterer beträchtlicher Vorteil liegt darin, dass aufgrund der großen Anzahl der Windenergieanlagen schon eine kurze Betrachtungszeit ausreichend ist, um signifikante Betriebsergebnisse zu erfassen und auszuwerten. Es hat sich gezeigt, dass unter günstigen Bedingungen, z. B. eine quer zur Windrichtung liegende Reihe von Offshore-Windenergieanlagen in einer Anzahl von zehn bis zwanzig schon ein zehnminütiger Betrieb ausreichen kann, um die Auswirkungen der Variation von Betriebsparametern auf die zu optimierende Zielgröße zu beurteilen. Die Erfindung macht sich hierbei die Erkenntnis zunutze, dass anstelle einer über einen längeren Zeitraum genommenen Zahl von Stichproben auch parallel zu einem Zeitpunkt gezogene Stichproben ein vergleichbares, aussagekräftiges Ergebnis liefern. Dadurch beschleunigt sich die Durchführung des erfindungsgemäßen Optimierungsverfahrens beträchtlich.

Die Gruppenbildung bietet weiter die Möglichkeit, aufwendigere Optimierungsverfahren zu verwenden, bei denen gleichzeitig mehrere Sätze von Parametern bewertet werden. Eine solche Möglichkeit besteht zum Beispiel darin, die Betriebsparametersätze für die Gruppe von Ziel-Windenergieanlagen so zu variieren, dass ein Gradientenfeld für den zu optimierenden Parameter gebildet ist. Es kann dann mit einem an sich bekannten Gradientenverfahren rasch ermittelt werden, mit welchem Wert die Optimierung am zweckmäßigstgen fortzusetzen ist. Dadurch konvergiert das Optimierungsverfahren sehr schnell, so dass frühzeitig ein optimaler Satz von Betriebsparametern aufgefunden werden kann. Je größer die Anzahl von Windenergieanlagen in der Gruppe, desto schneller kann die Optimierung durchgeführt werden. Damit bietet die Erfindung die Möglichkeit, gerade auch große Windparks schnell zu optimieren.

Es ist nicht erforderlich, dass eine 1:1-Relation zwischen Referenz-Windenergieanlagen und Ziel-Windenergieanlagen gewahrt ist. Es kann vorgesehen sein, mehrere Ziel-Windenergieanlagen zu verwenden. Das hat den Vorteil, dass Abweichungen der Windenergieanlagen untereinander erkannt und eventuelle Ausreißer auf diese Weise eliminiert werden können. Dadurch wird der Gefahr entgegengewirkt, dass eine defekte oder in anderer Weise gestörte Windenergieanlage zu verfälschten Ergebnissen des Optimierungsverfahrens führt.

Die Erfindung bezieht sich ferner auf eine Windenergieanlage mit einem Rotor, einen damit angetriebenen Generator zur Erzeugung elektrischer Energie und einer Steuerung, die zum Betrieb der Windenergieanlage anhand eines Satzes von Betriebsparametern ausgebildet ist, wobei die Steuerung mit einer Erfassungseinrichtung für Betriebs- und Zielgrößen einer Referenz-Windenergieanlage verbunden ist, und die Steuerung ein Optimierungsmodul zur Durchführung des erfindungsgemäßen Verfahrens ausweist.

Die Erfindung bezieht sich weiter auf einen Windpark mit mehreren Windenergieanlagen, die einen Rotor, einen damit angetriebenen Generator zur Erzeugung elektrischer Energie sowie eine Steuerung umfassen, welche zum Betreiben der Windenergieanlagen anhand eines Satzes von Betriebsparametern ausgebildet ist, und weiter ein Parkmaster mit Leitfunktion für die Windenergieanlagen vorgesehen ist, wobei erfindungsgemäß der Parkmaster ein Optimierungsmodul zur Durchführung des erfindungsgemäßen Verfahrens ausweist. Der Parkmaster braucht dabei nicht eine gesondert ausgeführte  Einrichtung zu sein, er kann auch als ein Element der Steuerung einer Windenergieanlage ausgebildet sein.

Zur Erläuterung wird auf vorstehende Beschreibung des erfindungsgemäßen Verfahrens verwiesen.

Die Erfindung wird nachfolgend unter Bezugnahme auf die beigefügte Zeichnung erläutert, in der vorteilhafte Ausführungsbeispiele der Erfindung dargestellt sind. Es zeigen:

Fig. 1   eine Übersichtsdarstellung eines Windparks zur Anwendung des erfindungsgemäßen Verfahrens;

Fig. 2   eine schematisierte Darstellung des Windparks bei der Durchführung des erfindungsgemäßen Verfahrens;

Fig. 3   ein weiteres Ausführungsbeispiel für einen Wind-park mit einem Strömungshindernis in der Umgebung;

Fig. 4   eine Evaluierungsmatrix für den in Fig. 3 dargestellten Windpark;

Fig. 5   eine Korrekturmatrix zu der Evaluierungsmatrix gemäß Fig. 4;

Fig. 6   ein weiteres Ausführungsbeispiel für einen Wind-park mit Gruppen von Windenergieanlagen;

Fig. 7   ein weiteres Ausführungsbeispiel für die Anwendung des erfindungsgemäßen Optimierungsverfahrens bei einzelnen Windenergieanlagen;

Fig. 8   einen Ablaufplan für ein Rahmenverfahren des erfindungsgemäßen Optimierungsverfahrens;

Fig. 9   einen Optimierungsschritt des in Fig. 8 dargestellten Optimierungsverfahrens.

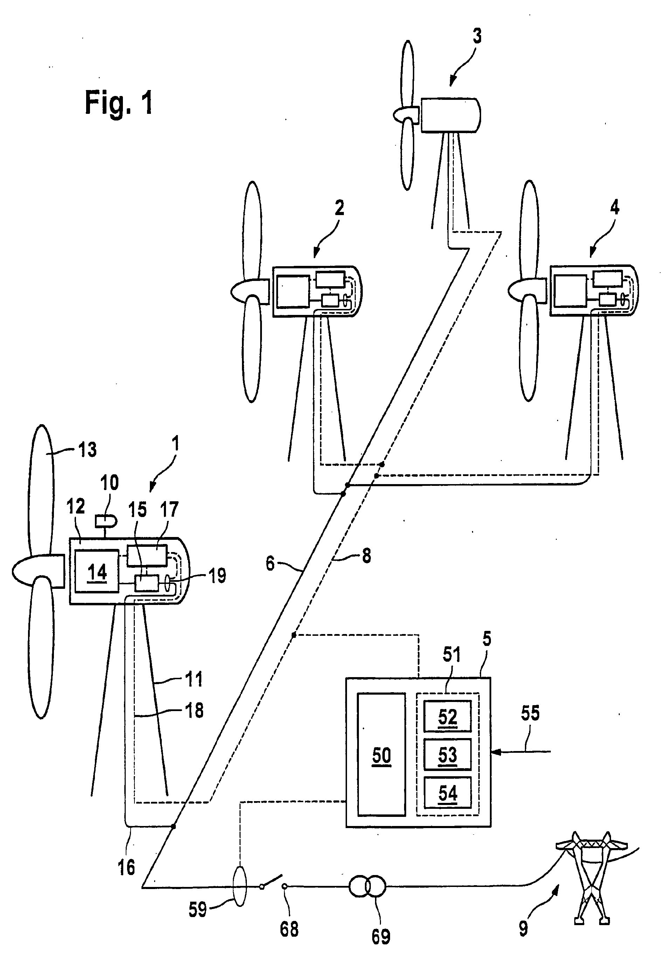

Ein zur Durchführung des erfindungsgemäßen Verfahrens vorgesehener Windpark ist in Fig. 1 dargestellt. Er umfasst eine Mehrzahl von Windenergieanlagen 1 bis 4 sowie einen Parkmaster 5.

Die Windenergieanlagen 1 bis 4 sind gleich aufgebaut. Für die Erläuterung des Aufbaus wird Windenergieanlage 1 herangezogen; für die übrigen gilt Entsprechendes. Die Windenergieanlage 1 umfasst einen Turm 11 mit einem schwenkbar darauf angeordneten Maschinenhaus 12. An dessen einer Stirnseite ist ein Rotor 13 drehbar gelagert und über eine Antriebswelle (nicht dargestellt) mit einem Generator 14 verbunden. Bei dem Generator 14 handelt es sich vorzugsweise um eine doppelt gespeiste Asynchronmaschine, es können aber auch andere Bauarten wie Synchron- oder Asynchronmaschinen verwendet werden. Der Generator 14 ist über einen Umrichter 15 mit einer Anschlussleitung 16 verbunden. Der Umrichter 15 kann als Voll- oder als Teilumrichter ausgeführt sein. Zur Bestimmung der Windrichtung ist eine Windfahne 10 als Sensor für die Steuerung 17 vorgesehen.

Zur Kontrolle des Betriebs der Windenergieanlage 1 ist eine Steuerung 17 vorgesehen. Sie ist dazu ausgebildet, die Windenergieanlage 1 gemäß einstellbarer Vorgaben zu betreiben. Die Vorgaben können intern festgelegt sein oder von extern über einen Datenanschluss 18 zugeführt sein. Die Steuereinrichtung 17 ist mit Messeinrichtungen verbunden, von denen exemplarisch eine Leistungsmesseinrichtung 19 dargestellt ist. Sie dient zur Ermittlung der von der Windenergieanlage abgegebenen elektrischen Spannung, des Stroms sowie der Phasenlage, woraus unter anderem die abgegebene elektrische Energie bestimmt werden kann. Damit und mittels über den Datenanschluss 18 übermittelter Vorgaben wird die Windenergieanlage 1 betrieben. Die Steuerung 17 weist dazu  entsprechende Regeleinrichtungen mit einer Vielzahl von Betriebsparametern auf.

Die Windenergieanlagen 1 bis 4 sind mit ihren jeweiligen Anschlussleitungen 16 mit einem Sammelnetz 6 des Windparks verbunden. In das Sammelnetz 6 wird die von den einzelnen Windenergieanlagen 1 bis 4 des Windparks abgegebene elektrische Energie eingespeist. Das Sammelnetz 6 ist über einen Verknüpfungspunkt 69 mit einem Hochspannungsnetz 9 eines Energieversorgungsunternehmens verbunden. An dem Verknüpfungspunkt 69 kann ein Transformator zur Erhöhung des Spannungsniveaus sowie eine Schalteinrichtung 68 zum Trennen des Windparks von dem Hochspannungsnetz 9 vorgesehen sein.

Die Datenleitungen 18 der Windenergieanlagen 1 bis 4 sind zu einem Datennetz 8 des Windparks zusammengefasst. Es ist verbunden mit einem Parkmaster 5. Dieser stellt eine zentrale Betriebsführung für sämtliche Windenergieanlagen 1 bis 4 des Windparks bereit. Ferner überwacht er mittels einer Messeinrichtung 59 den Anschluss des Windparks an das Hochspannungsnetz 9. Vorgaben von außen, wie beispielsweise solche des Betreibers des Hochspannungsnetzes 9 oder des Windparkbetreibers, werden über einen Anschluss 55 an den Parkmaster 5 angelegt. Der Parkmaster 5 ermittelt mittels eines Leitrechners 50 anhand der Betriebsbedingungen und der Vorgaben Sollgrößen für den Betrieb der einzelnen Windenergieanlagen 1 bis 4. Sie werden über das Datennetz 8 an die Steuereinrichtungen 17 der einzelnen Windenergieanlagen 1 bis 4 übermittelt. Weiter ist der Parkmaster 5 mit einem Optimierungsmodul 51 versehen. Es umfasst ein Bestimmungsglied 52, ein Optimierungsglied 53 sowie ein Validierunsglied 54. Die Wirkungsweise des Optimierungsmoduls mit seinen Funktionsgliedern wird später näher erläutert werden.

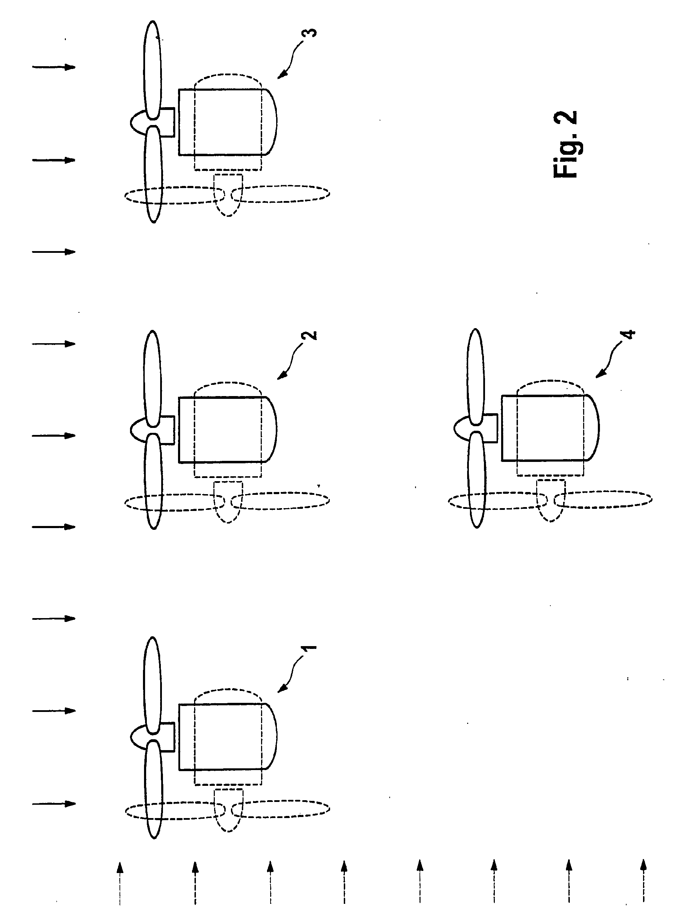

Zunächst soll unter Bezugnahme auf Fig. 2 ein Ausführungsbeispiel erläutert werden. Fig. 2 zeigt eine schematische Ansicht von oben des in Fig. 1 dargestellten Windparks. Man erkennt die in einer Reihe angeordneten Windenergieanlagen 1, 2 und 3 sowie die in einer zweiten Reihe dahinter einzeln angeordnete Windenergieanlage 4. Der Parkmaster 5 sowie das Sammelnetz 6 und das Datennetz 8 sind in der Fig. 2 nicht dargestellt. Zur Erläuterung sei weiter angenommen, dass der Windpark bei einem Wind betrieben wird, der mit den durchgezogenen Pfeilen symbolisiert ist. Die Windenergieanlagen 1 bis 4 sind dann wie mit durchgezogenen Linien dargestellt ausgerichtet.

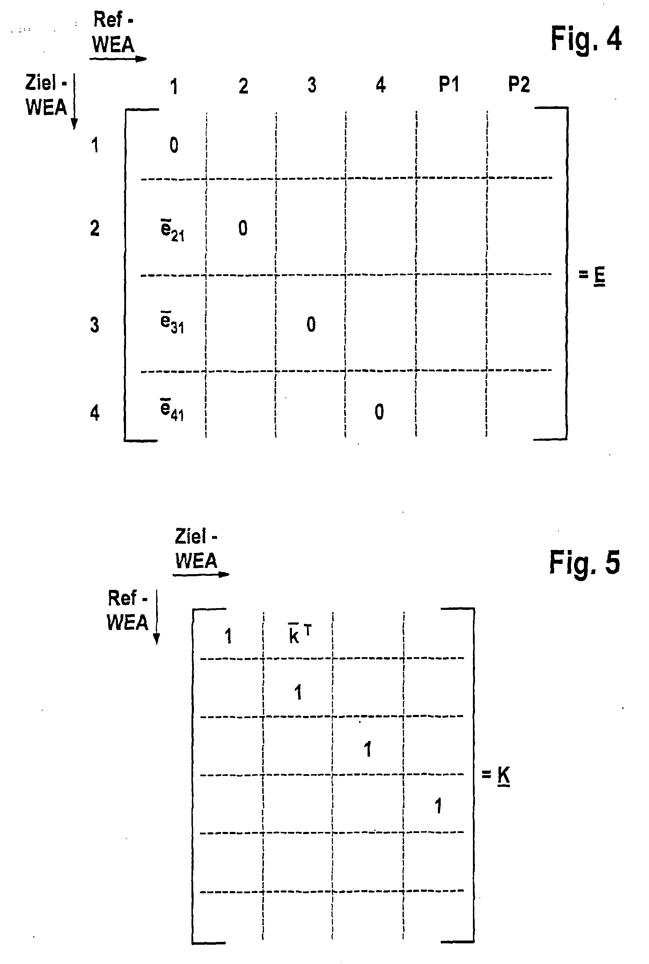

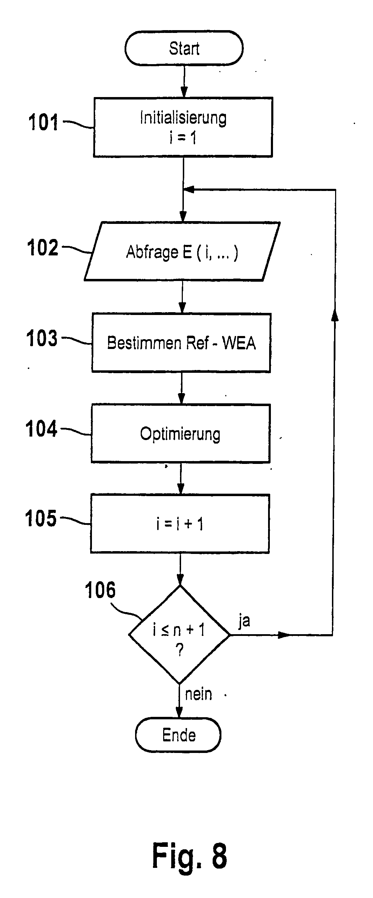

Zur Erläuterung sei nun das erfindungsgemäße Optimierungsverfahren betrachtet, wie es durch das Optimierungsmodul 51 ausgeführt wird. Es wird zusätzlich Bezug genommen auf Fig. 8. Zuerst wird eine Initialisierung und Auswahl der zu optimierenden Ziel-Windenergieanlage (Schritt 101) vorgenommen. Die zu optimierende Windenergieanlage sei die Anlage Nr. 2. In einem nächsten Schritt folgt eine Abfrage der Betriebsparameter der zu optimierenden Ziel-Windenergieanlage B(2) sowie der Werte der Evaluierungsmatrix $\underline{E}$ (Schritt 102). Dann kann anhand dieser Werte eine geeignete Referenzanlage bestimmt werden. Diese Bestimmung der ReferenzWindenergieanlage kann von Hand erfolgen, zweckmäßigerweise geschieht das aber automatisch mittels des Bestimmungsglieds 52. In Betracht kommen hier die Windenergieanlagen 1, 3 und 4. Es sei angenommen, dass zwischen allen Windenergieanlagen eine Übereinstimmung bezüglich der intrinsischen Bedingungen besteht, insbesondere hinsichtlich der Anlagengröße und des Regelungskonzepts. Damit besteht eine grundsätzliche Eignung als Referenz-Windenergieanlage. Weiter wird geprüft, welche Übereinstimmung in den extrinsischen Bedingungen besteht. Dazu gehört, ob die betrachtete Referenz-Windenergieanlage in Bezug auf die gegenwärtig vorherrschende Windrichtung im Vor- oder Nachlauf eines Hindernisses liegt. Ist dies der Fall so ist die betreffende Windenergieanlage als Referenz-Windenergieanlage ungeeignet. Wie man aus der Darstellung in Fig. 2 ohne Weiteres erkennt, sind die Windenergieanlagen 1 und 3 von ihrem Aufstellungsort her gleichwertig. Beide sind neben der zu optimierenden Ziel-Windenergieanlage 2 angeordnet und sind mutmaßlich denselben, wenn nicht - abgesehen von lokalen Turbulenzen - gar identischen Windbedingungen ausgesetzt. In Bezug auf die Windenergieanlage 4 ist dies anders. Sie ist unmittelbar hinter der Ziel-Windenergieanlage 2 angeordnet, befindet sich damit in deren Nachlauf. Hier ist mit Einflüssen des Betriebs der Ziel-Windenergieanlage auf die Windenergieanlage 4 zu rechnen. Diese eignet sich damit nicht als Referenz-Windenergieanlage. Bei beiden dann noch in Frage kommenden Windenergieanlagen 1, 3 wird die Übereinstimmung hinsichtlich der weiteren Parameter, insbesondere betreffend Windstärke und -richtung, bewertet. Details zur Durchführung werden später in Bezug auf Fig. 4 erläutert. Aus dem Übereinstimmungsgrad der intrinsischen und extrinsischen Bedingungen wird ein Rangwert gebildet. Dies geschieht sukzessive für die in Betracht kommenden Referenz-Windenergieanlagen. Die Anlage mit dem besten Rangwert wird schließlich als Referenz-Windenergieanlage bestimmt (Schritt 103). Im Beispiel sei damit die Anlage Nr. 1 die Referenz-Windenergieanlage.

Im nächsten Schritt 104 wird dann die eigentliche Optimierung mittels des Optimierungsglieds 53 durchgeführt. Dies wird später näher erläutert werden. Wenn die Optimierung für die Ziel-Windenergieanlage 2 abgeschlossen ist, wird mit der nächsten Windenergieanlage fortgefahren (Schritt 105 und 106), bis schließlich sämtliche Windenergieanlagen eines Parks (Schritt 106) optimiert wurden. Damit ist die Parkoptimierung beendet.

Weiter ist in Fig. 2 eine Variante mit gestrichelten Linien dargestellt, bei welcher der Wind aus der durch den gestrichelten Pfeil dargestellten Richtung weht. Hier sind nun in Windrichtung gesehen die Windenergieanlagen 1 bis 3 in Reihe angeordnet. Wie schon zuvor, soll beispielhaft die Windenergieanlage 2 optimiert werden. Bei der Bestimmung der Referenz-Windenergieanlage gelten dieselben Maßstäbe wie bei dem vorgenannten Beispiel. Aufgrund der geänderten Windrichtung ist das Ergebnis aber ein anderes. Die Windenergieanlagen 1 und 3 liegen wegen der anderen Windrichtung nun im Vor- bzw. Nachlauf der zu optimierenden Ziel-Windenergieanlage 2. Sie scheiden damit als Referenz-Windenergieanlage aus. Wegen dieser anderen Windbedingungen ist aber nun, anders als vorstehend diskutiert, die Windenergieanlage 4 als Referenz-Windenergieanlage favorisiert. Dies gilt jedenfalls in Bezug auf die Windbedingungen. Ob sie tatsächlich als Referenz-Windenergieanlage herangezogen werden kann, hängt noch von den vorgenannten statischen beziehungsweise intrinsischen Faktoren ab, insbesondere Maschinentyp, Maschinengröße, Regelungskonzept etc. Sollten diese intrinsischen Bedingungen die Wahl der Windenergieanlage 4 als Referenz-Windenergieanlage ausschließen, so steht dann keine geeignete Referenz-Windenergieanlage für das Optimieren der Windenergieanlage 2 zur Verfügung. Außerdem ist zu prüfen, ob die freie Anströmung der Windenergieanlage Nr. 4 nicht zu Verfälschungen im Vergleich zu der Nachlauf-Anströmung der Ziel-Windenergieanlage 2 führt. Im ungünstigen Fall kann dann bei dieser Windrichtung das erfindungsgemäße Verfahren nicht durchgeführt werden.

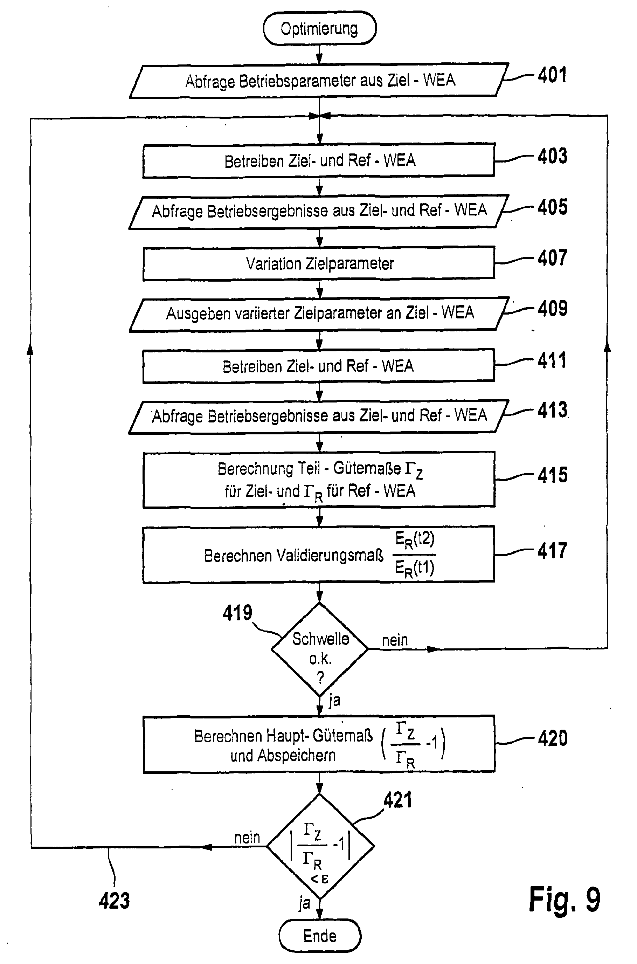

Es wird nun zur Erläuterung des Optimierungsschritts 104 auf Fig. 9 Bezug genommen. Zuerst wird von der Ziel-Windenergieanlage 2 ein Satz von Betriebsparametern eingelesen (Schritt 401). Nach Ablauf eines vorbestimmten Meßzeitraums, beispielsweise 10 Minuten, werden die mit dem ersten Satz von Betriebsparametern erreichten Betriebsergebnisse $E_Z(t1)$ der Ziel-Windenergieanlage 2 sowie Betriebsergebnisse $E_R(t1)$ der Referenz-Windenergieanlage 1 abgefragt und zwischengespeichert (Schritt 405). Während die Ziel-Windenergieanlage mit diesem (ersten) Satz von Betriebsparametern läuft (Schritt 403), wird durch Variation eines oder mehrerer zu optimierender Parameter (Zielparameter) ein zweiter, abweichender Satz von Betriebsparametern erzeugt (Schritt 407). Es wird dann der zweite Satz von Betriebsparametern mit dem variierten Zielparameter an die Ziel-Windenergieanlage 2 ausgegeben (Schritt 409), und sie wird mit diesem zweiten Satz betrieben (Schritt 411). Die Meßzeiträume sind jeweils 10 Minuten. Nach Ablauf eines zweiten Meßzeitraums werden die Betriebsergebnisse $E_Z(t2)$, die mit dem zweiten Satz erzielt wurden, abgefragt, außerdem werden die in diesem Zeitraum von der Referenz-Windenergieanlage erreichten Betriebsergebnisse $E_R(t2)$ abgefragt (Schritt 413). Diese Betriebsergebnisse des zweiten Meßzeitraums werden ebenfalls zwischengespeichert. Es wird nun ein erstes Teil-Gütemaß für die gewünschte Zielgröße aus den Betriebsergebnissen der Ziel-Windenergieanlage 2 gebildet (Schritt 415), indem 10-Minuten Mittelwerte (diese werden in der Regel ohnehin von der Steuerung 17 gebildet und stehen daher ohne zusätzlichen Aufwand zur Verfügung) der beiden Betriebsergebnisse $E_Z(t1)$, $E_Z(t2)$ durch Quotientenbildung in ein Verhältnis gesetzt werden. Entsprechend verfährt das Validierungsglied 54 mit den Referenzergebnissen der Referenz-Windenergie; daraus wird ein zweites Teil-Gütemaß als Validierungsmaß gebildet (Schritt 417). Schwankungen des Windes während der beiden Meßzeiträume, die zu einem Verfälschen des Gütemaß führen könnten, werden durch das Validierungsmaß aufgefangen. Auf diese Weise erfolgt eine Bereinigung des Gütemaß von Einflüssen, die nicht auf den Parameterabweichungen beruhen, sondern auf stochastischen Einflüssen, insbesondere des Winds.

Weist das Validierungsmaß einen sehr hohen oder niedrigen Wert außerhalb einstellbarer Validierungsschwellen auf, so waren die Schwankung durch den Wind während der beiden Meßzeiträume zu stark, als dass noch eine Vergleichbarkeit gegeben wäre. Das Ergebnis wird dann verworfen und das Verfahren wird wiederholt. Diese Prüfung folgt in einem optionalen Schritt 419.

Bei positivem Ergebnis der Validierung wird aus dem Teil-Gütemaß ein Gütemaß gebildet. Im einfachsten Fall kann das eine Quotientenbildung der Teil-Gütemaße für den Betrieb mit dem ersten Parametersatz und mit dem zweiten Parametersatz sein (Schritt 420). Damit kann festgestellt werden, ob durch die Variation des Betriebsparameters in der Ziel-Windenergieanlage 2 eine Verbesserung oder Verschlechterung erreicht wurde. Je nachdem wird der betroffene Betriebsparameter beibehalten oder weiter verändert, das Ergebnis wird ggf. für den nächsten Optimierungsschritt gespeichert. Hierzu können an sich bekannte Optimierungsverfahren zum Einsatz kommen. Der Vorgang wird wiederholt (Rücksprung 423), bis ein Abbruchkriterium erreicht ist (Schritt 421). Das Abbruchkriterium ist beispielsweise das Erreichen eines bestimmten Schwellwerts $\varepsilon$ und/oder eine Anzahl von Wiederholungen.

Als Schwellwert kann z. B. eine Veränderung des Gütemaßes "Energieertrag" um weniger als 0,1% nach mehr als zehn ausgewerteten 10-Minuten-Messintervallen dienen.

In den Schritten 405 und 413 kann optional eine Abfrage von Grenzwerten (z. B. ob Leistung oder Drehzahl im zulässigen Bereich lagen und/oder die optimale Schnelllaufzahl eingehalten wurde) vorgesehen sein, bei deren Überschreiten die jeweils erzielten Ergebnisse verworfen werden und der Schritt des Betreibens der Windenergieanlagen und des Abfragens wiederholt wird. Dazu kann dann ein Rücksprung zu den Schritten 403 bzw. 411 vorgesehen sein.

Die zu optimierende Zielgröße ist hier der Ertrag an gewonnener elektrischer Energie. Hierbei kann die Bildung des Gütemaß in Schritt 415 besonders einfach und mit wenig Aufwand erreicht werden. Beispielsweise kann dies durch Aufaddieren der von den Windenergieanlagen erzeugten elektrischen Leistung zur abgegebenen elektrischen Energie erfolgen. Dies kann gegebenenfalls mittels einer gesonderten Einrichtung (Kilowattstundenzähler) durchgeführt werden. Hierbei kann gegebenenfalls auf vorhandene Einrichtungen der Windenergieanlage zurückgegriffen werden. Es können aber auch andere Zielgrößen optimiert werden, beispielsweise die Geräuschemission, die Netzverträglichkeit der erzeugten elektrischen Leistung, die Maschinenbelastung oder das Schwingungsverhalten. Dabei können auch aufwendigere Gütemaße herangezogen werden, die mehrere Parameter berücksichtigen, beispielsweise zusätzlich noch die Geräuschemission oder Maschinenbelastung.

Die Messzeiträume für den Betrieb mit den Betriebsparameter können unterschiedlich vorgegeben werden, z. B. 10 min für Blattwinkel oder Momentenkennlinie, wenige Minuten - 10 min für Regelparameter, einige Sekunden bis Minuten bei Umrichterparametern, die z. B. die Netzverträglichkeit beeinflussen. Die Zeit und die Anzahl der Messzeiträume wird so gewählt, dass eine ausreichende Absicherung der Messergebnisse vorliegt. Je komplexer die Randbedingungen (z. B. hügeliges Gelände, unregelmäßige Anlagenverteilung, sehr turbulenter Wind), desto länger muss gemessen werden, um den Effekt der Parametervariation beurteilen zu können.

Weiter sei ein Zahlenbeispiel für die Variation des Blattwinkels als variierten Betriebsparameter erläutert. Die zu optimierende Zielgröße ist die abgegebene Leistung und für das Gütemaß ist der Energieertrag maßgebend.

Das Beispiel ist eine Variation des Blattwinkels im Teillastbereich um 1,0 Grad, bei zufälligerweise schwächer werdendem Wind:

Messzeitraum 1, Blattwinkel Ziel-Windenergieanlage 0,3 Grad:

$$E_Z(t1) = 43 \text{kWh} \qquad E_R(t1) = 51 \text{kWh}$$

Messzeitraum 2, Blattwinkel Ziel-Windenergieanlage = 1,3 Grad:

$$E_Z(t2) = 38 \text{kWh} \qquad E_R(t2) = 44 \text{kWh}.$$

Teil-Gütemaße:

$$\Gamma_Z = \frac{38}{43} = {,}884 \qquad \Gamma_R = \frac{44}{51} = 0{,}863$$

Validierungsmaß wird aus

$$\frac{E_R(t2)}{E_R(t1)} = 0{,}863$$

gebildet.

Validierung- Schwelle: max 30% Abweichung, d. h. $0{,}7 < \text{Validierungsmaß} < 1{,}3 \Rightarrow$ o.k.

Bildung Haupt-Gütemaß r durch Quotientenbildung:

$$\Gamma = \left( \frac{\Gamma_Z}{\Gamma_R} - 1 \right) = 0{,}024 \quad .$$

Positive Ergebnisse bedeuten eine Verbesserung der Güte, negative eine Verschlechterung. Das bedeutet, der Ertrag hat sich bereinigt um den Windeinfluss im 2. Messzeitraum durch die Variation des Blattwinkels um 2,4% verbessert

Bei vollkommen identischen Anlagen kann das oben erläuterte, einfache Berechnungsverfahren auch für andere physikalische Größen, z.B. Betriebsbelastungen durchgeführt werden. Die Teilgüttemaße lassen sich als Quotienten von schädigungsäquivalenten Lasten (DEL) bilden, welche sich, wie im Stand der Technik ausreichend bekannt, z.B. über das Online- Rainflow- Count- Verfahren aus gemessenen Belastungszeitreihen bestimmen lassen. Sind jedoch die Anlagen verschieden, kann sinnvoll nur mit mehrdimensionalen Gütemaßen gearbeitet werden. Auf grund des obengenannten Beispiels sei noch ein weiteres erläutert, bei dem nicht nur eindimensional der Ertrag zu verbessern ist, sondern ein mehrdimensionales Gütemaß zu bilden ist, im Beispiel zweidimensional durch zusätzliche Berücksichtigung der Maschinenbelastung (DEL = damage equivalent lad) . Vor allem dann, wenn die Ziel- Windenergieanlage und die ReferenzWindenergieanlage unterschiedliche Typen sind, bietet sich die Berücksichtigung der DEL in einem Zwischenschritt an, damit die Belastung der Windenergieanlage bei der Bildung des Gütemaßes entsprechend berücksichtigt werden kann. Dafür werden zusätzlich als Parameter benötigt die Maschinen- belastung der Ziel- Windenergieanlage während der beiden Messzeiträume $DEL_Z(t1)$ und $DEL_Z(t2)$ . Im Übrigen wird auf die Parameter des vorangehenden Beispiels zurückgegriffen.

Um zufällige Schwankungen bereinigte Ertragsverbesserung

$$\Delta E = \frac{E_Z(t2)}{E_R(t2)} \cdot \frac{E_R(t1)}{E_Z(t1)}, \quad \text{z. B. 2,4\% (s. o.)}$$

relative Belastungsänderung

$$\Delta L = \frac{DEL_z(t2) - DEL_z(t1)}{DEL_z(t1)}, \; \text{z. B. } 1,3\%.$$

Daraus wird ein mehrdimensionales Hauptgütemaß gebildet:

$$\Gamma = f\,(\Delta L,\; \Delta E).$$

Dabei ist *f* eine anlagen- und standortspezifische Funktion zur Verknüpfung der Belastungszunahme mit der Ertragsverbesserung.

Einfach gesagt hat das Hauptgütemaß zu bewerten, ob im oben genannten Beispiel eine Ertragsverbesserung um 2,4% mit einer gleichzeitigen Zunahme der Anlagenbelastung um 1,3% eine Gesamtverbesserung darstellt, oder ob die Belastungszunahme derart schädlich ist, dass ein Verzicht auf den Mehrertrag vorteilhafter ist.

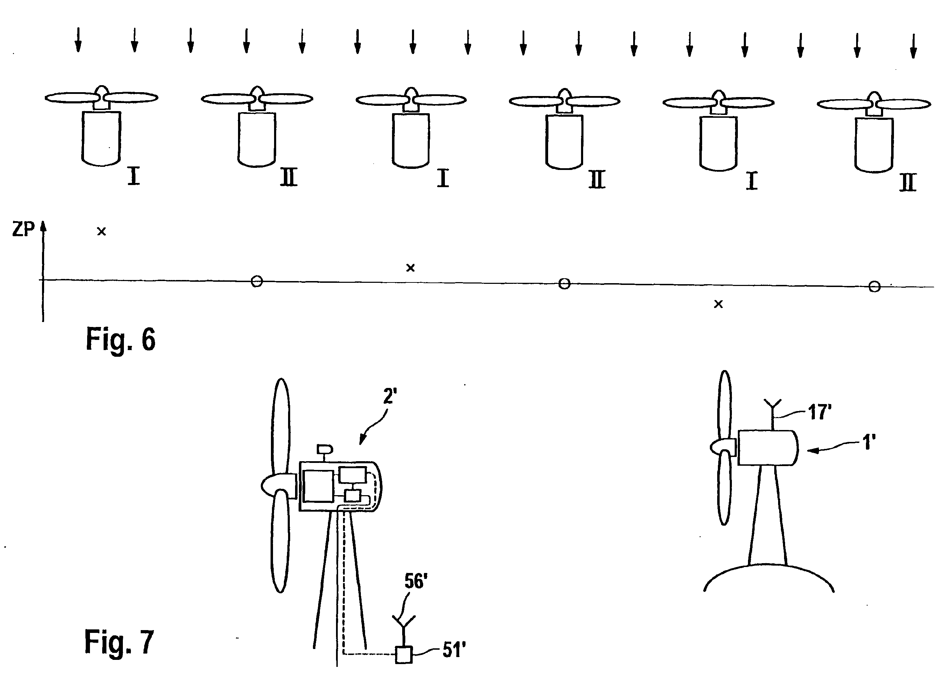

In Fig. 6 ist ein weiteres Anwendungsbeispiel dargestellt. Hier sind in einem Windpark sechs Windenergieanlagen in einer Reihe aufgestellt. Es sei angenommen, dass der Wind im Wesentlichen quer zu der Reihe wehe. Zur schnelleren Durchführung des erfindungsgemäßen Optimierungsverfahrens kann es, vergleichbaren Maschinentyp etc. vorausgesetzt, auf mehrere Ziel-Windenergieanlagen zur selben Zeit angewendet werden (Gruppe I). Die übrigen Windenergieanlagen in der Reihe werden als Referenz-Windenergieanlagen bestimmt. Sie bilden die Gruppe II. Beim Ablauf des erfindungsgemäßen Optimierungsverfahrens wird nun der Betrieb aller Windenergieanlagen überwacht und erfasst. Dies hat den Vorteil, dass bedingt durch die große Anzahl erfasster Windenergieanlagen häufig schon ein recht kurzer Betrieb ausreicht, um den Effekt von Variationen der Betriebsparameter beurteilen zu können. Anstelle mehrerer 10-Minuten-Mittelwerte genügt es häufig, lediglich einen solchen 10-Minuten-Mittelwert zu erfassen. Die ansonsten über die Zeit vorgenommene Ermittlung zufälliger Schwankungen erfolgt in diesem Fall durch die Erfassung einer größeren Anzahl von Windenergieanlagen. Somit kann auch ein Windpark mit einer verhältnismäßig großen Zahl von Windenergieanlagen rasch dem erfindungsgemäßen Optimierungsverfahren unterzogen werden.

In Fig. 6 ist weiter dargestellt, dass die Ziel-Windenergieanlagen der Gruppe I mit unterschiedlichen Werten für den zu optimierenden Zielparameter betrieben werden. Diese sind im Koordinatenkreuz symbolisiert. Für einen Zielparameter ZP ist der jeweils in einer der Ziel-Windenergieanlagen eingestellte Wert mit einem Kreuz dargestellt. Die Ziel-Windenergieanlagen werden von links beginnend mit einem stark erhöhten, einem teilweise erhöhten und einem erniedrigten Wert für diese Zielgröße betrieben. Der Wert, mit dem die Referenz-Windenergieanlage betrieben wird, ist durch einen Kreis dargestellt. Mit dem erfindungsgemäßen Optimierungsverfahren kann nun rasch beurteilt werden, ob der ursprüngliche Wert, wie er von der Referenz-Windenergieanlage verwendet wird, optimal ist, oder in welche Richtung und welchen Betrag die Suche nach einem Optimalwert fortzusetzen ist. Ist der Optimalwert gefunden, so kann das erfindungsgemäße Verfahren angewendet auf einen anderen Betriebsparameter fortgesetzt werden.

Das Einbeziehen mehrere Referenz-Windenergieanlagen in eine Gruppe (Gruppe II) hat weiter den Vorteil, dass ein Abgleich der Referenz-Windenergieanlagen untereinander erfolgen kann. Auf diese Weise können Ausreißer ermittelt und gegebenenfalls eliminiert werden, so dass die Qualität der Referenzierung auch in solchen Fällen erhalten bleibt. Das ist insbesondere in solchen Fällen von Bedeutung, wenn bei einer sukzessive erfolgenden Optimierung wie derjenigen in einem Windpark eine Referenz-Windenergieanlage vorher als Ziel-Windenergieanlage optimiert worden ist, wobei Parameter verändert wurden. In ungünstigen Fällen kann es geschehen, dass die Anlage "verstellt wurde", so dass sie sich nicht mehr zur Verwendung als Referenz-Windenergieanlage eignet. Dies kann durch eine solche Gruppenbildung erkannt werden.

In Fig. 7 ist ein Ausführungsbeispiel dargestellt, bei dem eine einzelne Windenergieanlage 2' zu optimieren ist, die nicht Bestandteil eines Windparks ist. Damit das erfindungsgemäße Erfahren durchgeführt werden kann, ist eine Referenz-Windenergieanlage 1' erforderlich. Sie braucht nicht mit der zu optimierenden Ziel-Windenergieanlage 2' zu einem Windpark verbunden zu sein, es genügt, wenn sie in räumlicher Nähe angeordnet ist. Je größer die Übereinstimmung in den intrinsischen und extrinsischen Bedingungen, desto besser die Eignung als Referenz-Windenergieanlage 1'. Es kann genügen, wenn lediglich ein Lesezugriff auf zeitlich synchronisierte Betriebsergebnisse beziehungsweise Betriebsparameter der Referenz-Windenergieanlage 1' besteht. Diese werden mittels einer geeigneten Übermittlungseinrichtung an die Ziel-Windenergieanlage 2' übermittelt. Diese kann dann im Übrigen autonom die Optimierung ausführen. Ein aktiver Zugriff auf die Referenz-Windenergieanlage 1' ist bei dem erfindungsgemäßen Optimierungsverfahren nicht erforderlich. Die Übermittlungseinrichtung kann beispielsweise als eine Funkstrecke mit Antennen 17' und 56' ausgebildet sein. Damit ist es ermöglicht, eine Pilotanlage an einem ausgesuchten Standort als Referenz-Windenergieanlage für eine Mehrzahl von umliegenden, einzeln betriebenen Windenergieanlagen zu verwenden. Je größer die räumliche Entfernung, desto längere Messzeiträume sind erforderlich, um stochastische Windschwankungen auszuschalten.

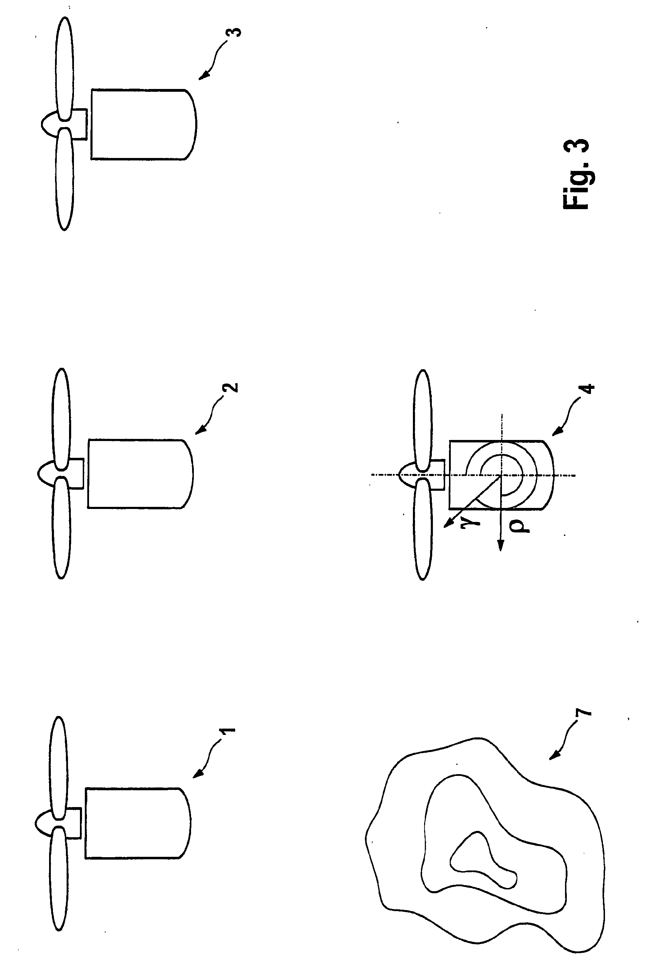

In Fig. 4 ist die Evaluierungsmatrix E dargestellt. In den Zeilen sind Einträge für die zu optimierenden Windenergieanlagen 1 bis 4 vorgesehen. In den Spalten sind die als Referenz-Windenergieanlage in Frage kommenden Windenergieanlagen eingetragen. In dem dargestellten Ausführungsbeispiel sind dies die Anlagen 1 bis 4, wie in Fig. 3 dargestellt, sowie zwei weitere Windenergieanlagen P1 und P2. Diese sind nicht Bestandteil des zu optimierenden Windparks (und deshalb nicht dargestellt), sondern sind gesondert betriebene Windenergieanlagen, auf die lediglich ein passiver Zugriff zum Auslesen von Parametern und Betriebsergebnissen besteht. Die Diagonale der Evaluierungsmatrix weist Nullwerte auf. Das bedeutet, dass eine Anlage nicht für sich selbst als Referenz-Windenergieanlage verwendet werden kann. In den übrigen Zellen der Matrix sind Vektoren eingetragen. Der Vektor umfasst Vektorwerte für intrinsische und extrinsische Bedingungen. Die Evaluierungsmatrix enthält im einfachsten Fall für verschiedene Windrichtungssektoren (z. B. 10 Grad Sektoren) eine Referenzgüte (z. B. 0-100 Punkte). Die Referenzgüte kann von erfahrenen Fachleuten geschätzt werden. Bei einer Automatisierung wird die Referenzgüte anhand einer Vielzahl von Parametern von der Steuerung errechnet. Einige der wichtigsten Einflussfaktoren sind: intrinsisch: Rotordurchmesser, Nabenhöhe, Anlagenleistung, Regelungskonzept, Anlagenvariante, Anlagenalter, usw. Extrinsisch: Position der Anlagen zueinander, Lage und Einfluss von orographischen Hindernissen, Angaben zu den lokalen Anströmungsbedingungen (Windgeschwindigkeit, -richtung, Windgradient, Turbulenzenintensität, ...) usw.

Eine Korrekturmatrix K weist einen ähnlichen Aufbau auf, allerdings sind hier die Referenz-Windenergieanlagen in den Zeilen und die Ziel-Windenergieanlagen in den Spalten angeordnet. Ein Beispiel ist in Fig. 5 dargestellt. Die Korrekturmatrix weist im einfachsten Fall für verschiedene Windrichtungssektoren Korrekturfaktoren auf. Der jeder Referenzgüte zuordbare Korrekturwert berücksichtigt z. B. empirische Erfahrung über die Referenzgüte aus zurückliegenden Optimierungen, die z. B. durch Vergleich mit anderen Referenzanlagen ermittelt wurden. Oben erwähnte Ausreißer in Gruppen von Referenzanlagen würden z. B. mit einem die Referenzgüte stark herabsetzenden Korrekturwert belegt.

**Patentansprüche**

1. Verfahren zum Optimieren des Betriebs von Windenergieanlagen, die jeweils einen Rotor (13), einen damit angetriebenen Generator (14) zur Erzeugung elektrischer Energie und eine Steuerung (17) umfassen, welche die jeweilige Windenergieanlage anhand eines Satzes von Betriebsparametern betreibt, und eine der Windenergieanlagen als Ziel-Windenergieanlage und eine zweite der Windenergieanlagen als Referenz-Windenergieanlage verwendet wird, **gekennzeichnet durch**
Betreiben (404) der zu optimierenden Ziel-Windenergieanlage (2) zuerst mit einem ersten Satz von Betriebsparametern und danach mit einem vom ersten Satz abweichenden zweiten Satz von Betriebsparametern,
Erfassen (405) von Zielgrößen der Ziel-Windenergieanlage (2), wobei die Zielgrößen Systemvariablen sind, und von Referenzergebnissen der Referenz-Windenergieanlage (1) jeweils für beide Sätze von Betriebsparametern,
automatisiertes Auswerten (406) der Zielgrößen **durch** Berechnen eines Gütemaßes unter Berücksichtigung der Referenzergebnisse, und
automatisiertes Bestimmen (407) des Satzes von Betriebsparametern mit dem besseren Gütemaß.

2. Verfahren nach Anspruch 1,
**gekennzeichnet durch**
Verwenden der abgegebenen Leistung für die Zielgröße und des Ertrages der elektrischen Energie für das Gütemaß.

3. Verfahren nach Anspruch 1 oder 2,
**gekennzeichnet durch**
Variieren der Betriebsparameter (402), so dass der erste Satz und der abweichende zweite Satz von Betriebsparametern gebildet wird.

4. Verfahren nach einem der vorangehenden Ansprüche,
**gekennzeichnet durch**
Variieren des Betriebsparameters für einen Blattwinkel, eine Drehzahl-Drehmomentkennlinie oder einen Offset eines Windrichtungssensors.

5. Verfahren nach einem der vorangehenden Ansprüche,
**gekennzeichnet durch**
Nicht-Variieren der Betriebsparameter der Referenz-Windenergieanlage (1).

6. Verfahren nach einem der vorangehenden Ansprüche,

**gekennzeichnet durch**

Abfragen (102) einer Evaluierungsmatrix (E) zur Validierung der Referenz-Windenergieanlage (1), wobei in der Evaluierungsmatrix (E) Elemente für verschiedene Kombinationen aus ziel- und Referenz-Windenergieanlagen (2, 1) enthalten sind.

**7.** Verfahren nach Anspruch 6,
**dadurch gekennzeichnet, dass**
die Evaluierungsmatrix (E) als Elemente Vektoren aufweist.

**8.** Verfahren nach einem der Ansprüche 6 oder 7,
**dadurch gekennzeichnet, dass**
eine Korrekturmatrix (K) für die Evaluierungsmatrix vorgesehen ist.

**9.** Verfahren nach Anspruch 8,
**gekennzeichnet durch**
Durchführen eines selbstlernenden Verfahrens zum Bestimmen der Korrekturmatrix (K).

**10.** Verfahren nach einem der vorangehenden Ansprüche,
**gekennzeichnet durch**
automatisches Bestimmen (103) der ReferenzWindenergieanlage (1), wobei vorzugsweise die Evaluierungsmatrix (E) zur Bestimmung herangezogen wird.

**11.** Verfahren nach Anspruch 10,
**gekennzeichnet durch**
Verwenden von statischen und dynamischen Bedingungen für das automatisierte Bestimmen (103) der ReferenzWindenergieanlage (1),

**12.** Verfahren nach Anspruch 10 oder 11,
**gekennzeichnet durch**
Verwenden von intrinsischen Bedingungen für das automatisierte Bestimmen (103) der Referenz-Windenergieanlage (1).

**13.** Verfahren nach einem der Ansprüche 10 bis 12,
**gekennzeichnet durch**
Verwenden von extrinsischen Bedingungen für das automatisierte Bestimmen (103) der Referenz-Windenergieanlage (1).

**14.** Verfahren nach einem der vorangehenden Ansprüche,
**gekennzeichnet durch**
Verwenden von Gruppen (I, II) von Windenergieanlagen für die Ziel-Windenergieanlage und/oder die ReferenzWindenergieanlage.

**15.** Verfahren nach Anspruch 14,
**gekennzeichnet durch**
Vergleichen der Windenergieanlagen in einer Gruppe und Detektieren sowie Eliminieren von Ausreißern in der Gruppe.

**16.** Verfahren nach einem der Ansprüche 14 oder 15,
**gekennzeichnet durch**
Bestimmen von abweichenden Sätzen von Betriebsparametern für die Ziel-Windenergieanlagen einer Gruppe in der Weise, dass sich ein Gradientenfeld bezüglich des veränderten Betriebsparameters ergibt.

**17.** Windenergieanlage mit einem Rotor (13), einem damit angetriebenen Generator (14) zur Erzeugung elektrischer Energie und einer Steuerung (17), die zum Betrieb der Windenergieanlage anhand eines Satzes von Betriebsparametern ausgebildet ist,
**dadurch gekennzeichnet, dass**
die Steuerung (17) eine Übermittlungseinrichtung für eine Verbindung zu einer Referenz-Windenergieanlage aufweist und ein Optimierungsmodul (51) zur Durchführung des Verfahrens nach einem der Ansprüche 1 bis 16 vorgesehen ist.

18. Windpark mit mehreren Windenergieanlagen, die jeweils einen Rotor (13), einen damit angetriebenen Generator (14) zur Erzeugung elektrischer Energie und eine Steuerung (17) umfassen, welche zum Betrieb der jeweiligen Windenergieanlage anhand eines Satzes von Betriebsparametern ausgebildet ist, und ein Parkmaster (5) mit Leitfunktion für die windenergieanlagen vorgesehen ist,
**dadurch gekennzeichnet, dass**
der Parkmaster (5) ein Optimierungsmodul (51) zur Durchführung des Verfahrens nach einem der Ansprüche 1 bis 16 aufweist.

**Claims**

1. Method for optimization of the operation of wind energy installations which in each case comprise a rotor (13), a generator (14) driven by the rotor (13) in order to produce electrical energy, and a controller (17) which operates the respective wind energy installation on the basis of a set of operating parameters, and one of the wind energy installations is used as the target wind energy installation and a second of the wind energy installations is used as the reference wind energy installation,
**characterized by**
operation (404) of the target wind energy installation (2) which is to be optimized, first of all using a first set of operating parameters and then using a second set of operating parameters different from the first set,
recording (405) of target variables for the target wind energy installation (2), the target variables being system variables, and of reference results of the reference wind energy installation (1) in each case for both sets of operating parameters,
automated evaluation (406) of the target variables by calculation of a quality measure taking account of the reference results, and
automated determination (407) of the set of operating parameters with the better quality measure.

2. Method according to Claim 1,
**characterized by**
use of the output power for the target variable and of the electrical energy yield for the quality measure.

3. Method according to Claim 1 or 2,
**characterized by**
variation of the operating parameters (402), such that the first set and the different second set of operating parameters are formed.

4. Method according to one of the preceding claims,
**characterized by**
variation of the operating parameter for a blade angle, a rotation-speed torque characteristic or an offset of a wind direction sensor.

5. Method according to one of the preceding claims,
**characterized by**
non-variation of the operating parameters of the reference wind energy installation (1).

6. Method according to one of the preceding claims,
**characterized by**
checking (102) of an evaluation matrix ($\underline{E}$) for validation of the reference wind energy installation (1), with the evaluation matrix ($\underline{E}$) containing elements for various combinations of target and reference wind energy installations (2, 1).

7. Method according to Claim 6,
**characterized in that**
the evaluation matrix ($\underline{E}$) has vectors as elements.

8. Method according to one of Claims 6 or 7,
**characterized in that**

a correction matrix ($\underline{K}$) is provided for the evaluation matrix.

9. Method according to Claim 8,
   **characterized by**
   a self-learning method being carried out in order to determine the correction matrix ($\underline{K}$).

10. Method according to one of the preceding claims,
    **characterized by**
    automatic definition (103) of the reference wind energy installation (1), with the evaluation matrix ($\underline{E}$) preferably being used for determination.

11. Method according to Claim 10,
    **characterized by**
    use of static and dynamic conditions for the automatic definition (103) of the reference wind energy installation (1).

12. Method according to Claim 10 or 11,
    **characterized by**
    use of intrinsic conditions for the automatic definition (103) of the reference wind energy installation (1).

13. Method according to one of Claims 10 to 12,
    **characterized by**
    use of extrinsic conditions for the automatic definition (103) of the reference wind energy installation (1).

14. Method according to one of the preceding claims,
    **characterized by**
    use of groups (I, II) of wind energy installations for the target wind energy installation and/or the reference wind energy installation.

15. Method according to Claim 14,
    **characterized by**
    comparison of the wind energy installations in one group, and detection as well as elimination of spurious results in the group.

16. Method according to one of Claims 14 or 15,
    **characterized by**
    definition of different sets of operating parameters for the target wind energy installations in a group, in such a manner that this results in a gradient field with respect to the changed operating parameter.

17. Wind energy installation having a rotor (13), a generator (14) driven by the rotor (13) in order to produce electrical energy, and a controller (17) which is designed for operation of the wind energy installation on the basis of a set of operating parameters,
    **characterized in that**
    the controller (17) has a transmission device for a connection to a reference wind energy installation and an optimization module (51) is provided in order to carry out the method according to one of Claims 1 to 16.

18. Windpark having a plurality of wind energy installations which in each case comprise a rotor (13), a generator (14) driven by the rotor (13) in order to produce electrical energy, and a controller (17) which is designed for operation of the respective wind energy installation on the basis of a set of operating parameters, and a parkmaster (5) with a control function is provided for the wind energy installations,
    **characterized in that**
    the parkmaster (5) has an optimization module (51) for carrying out the method according to one of Claims 1 to 16.

**Revendications**

1. Procédé permettant d'optimiser le fonctionnement des éoliennes, qui comportent chacune un rotor (13), un générateur (14) actionné par celui-ci pour générer de l'énergie électrique, et une commande (17) qui actionne l'éolienne concernée à l'appui d'un bloc de paramètres de service, et l'une des éoliennes est utilisée comme éolienne cible et une deuxième éolienne est utilisée comme éolienne de référence,
**caractérisé par**
le fonctionnement (404) de l'éolienne cible (2) à optimiser, d'abord avec un premier bloc de paramètres de service et ensuite avec un deuxième bloc de paramètres de service, différent du premier bloc,
la détection (405) des grandeurs cibles de l'éolienne cible (2), les grandeurs cibles étant des variables du système, et des résultats de référence de l'éolienne de référence (1) respectivement pour deux blocs de paramètres de service,
l'analyse automatisée (406) des grandeurs cibles par le calcul d'une grandeur de qualité en tenant compte des résultats de référence, et
la détermination automatisée (407) du bloc de paramètres de service avec la meilleure grandeur de qualité.

2. Procédé selon la revendication 1, **caractérisé par** l'utilisation de la puissance délivrée pour la grandeur cible et du rendement de l'énergie électrique pour la grandeur de qualité.

3. Procédé selon la revendication 1 ou 2, **caractérisé par** la variation des paramètres de service (402), de manière à former le premier bloc et le deuxième bloc différent de paramètres de service.

4. Procédé selon l'une quelconque des revendications précédentes, **caractérisé par** la variation du paramètre de service pour un angle d'une pale, une courbe caractéristique vitesse de rotation/couple de rotation ou un décalage d'un capteur de direction du vent.

5. Procédé selon l'une quelconque des revendications précédentes, **caractérisé par** la non-variation des paramètres de service de l'éolienne de référence (1).

6. Procédé selon l'une quelconque des revendications précédentes, **caractérisé par** l'interrogation (102) d'une matrice d'évaluation (E) pour la validation de l'éolienne de référence (1), ladite matrice d'évaluation (E) contenant des éléments pour différentes combinaisons formées par des éoliennes cible (2) et des éoliennes de référence (1).

7. Procédé selon la revendication 6, **caractérisé en ce que** les éléments contenus dans ladite matrice d'évaluation (E) sont des vecteurs.

8. Procédé selon la revendication 6 ou 7, **caractérisé en ce qu'**il est prévu une matrice de correction (K) pour la matrice d'évaluation.

9. Procédé selon la revendication 8, **caractérisé par** la mise en oeuvre d'un procédé auto-adaptatif pour la détermination de la matrice de correction (K).

10. Procédé selon l'une quelconque des revendications précédentes, **caractérisé par** la détermination automatique (103) de l'éolienne de référence (1), la matrice d'évaluation (E) étant prise en compte pour ladite détermination.

11. Procédé selon la revendication 10, **caractérisé par** l'utilisation de conditions statiques et dynamiques pour la détermination automatisée (103) de l'éolienne de référence (1).

12. Procédé selon la revendication 10 ou 11, **caractérisé par** l'utilisation de conditions intrinsèques pour la détermination automatisée (103) de l'éolienne de référence (1).

13. Procédé selon l'une quelconque des revendications 10 à 12, **caractérisé par** l'utilisation de conditions extrinsèques pour la détermination automatisée (103) de l'éolienne de référence (1).

14. Procédé selon l'une quelconque des revendications précédentes, **caractérisé par** l'utilisation de groupes (I, II) d'éoliennes pour l'éolienne cible et/ou l'éolienne de référence.

15. Procédé selon la revendication 14, **caractérisé par** la comparaison des éoliennes dans un groupe et la détection, ainsi que l'élimination des éléments aberrants dans ledit groupe.

16. Procédé selon la revendication 14 ou 15, **caractérisé par** la détermination de blocs différents de paramètres de service pour les éolienne cible d'un groupe, de telle sorte qu'il se forme un champ de gradients relatif au paramètre de service modifié.

**17.** Éolienne, comportant un rotor (13), un générateur (14) actionné par celui-ci pour générer de l'énergie électrique, et une commande (17) qui est conçue pour faire fonctionner l'éolienne à l'appui d'un bloc de paramètres de service, **caractérisée en ce que** la commande (17) comporte un dispositif de communication pour une liaison vers une éolienne de référence, et il est prévu un module d'optimisation (51) pour la mise en oeuvre du procédé selon l'une quelconque des revendications 1 à 16.

**18.** Parc d'éoliennes comportant plusieurs éoliennes, qui comportent chacune un rotor (13), un générateur (14) actionné par celui-ci pour générer de l'énergie électrique, et une commande (17) qui est conçue pour faire fonctionner l'éolienne concernée à l'appui d'un bloc de paramètres de service, et il est prévu un maître de parc (5) avec une fonction de commande pour les éoliennes, **caractérisé en ce que** le maître de parc (5) comporte un module d'optimisation (51) pour la mise en oeuvre du procédé selon l'une quelconque des revendications 1 à 16.

# Fig. 1

Fig. 2

1

2

3

7

γ

ρ

4

**Fig. 3**

## Fig. 4

Ref - WEA →

Ziel - WEA ↓

|  | 1 | 2 | 3 | 4 | P1 | P2 |
|---|---|---|---|---|---|---|
| 1 | 0 |  |  |  |  |  |
| 2 | $\bar{e}_{21}$ | 0 |  |  |  |  |
| 3 | $\bar{e}_{31}$ |  | 0 |  |  |  |
| 4 | $\bar{e}_{41}$ |  |  | 0 |  |  |

$= \underline{E}$

## Fig. 5

Ziel - WEA →

Ref - WEA ↓

| 1 | $\bar{k}^T$ |  |  |
|---|---|---|---|
|  | 1 |  |  |
|  |  | 1 |  |
|  |  |  | 1 |
|  |  |  |  |
|  |  |  |  |

$= \underline{K}$

**Fig. 6**

**Fig. 7**

EP 1 817 496 B1

Fig. 8

Optimierung

Abfrage Betriebsparameter aus Ziel - WEA —— 401

Betreiben Ziel- und Ref - WEA —— 403

Abfrage Betriebsergebnisse aus Ziel- und Ref - WEA —— 405

Variation Zielparameter —— 407

Ausgeben variierter Zielparameter an Ziel - WEA —— 409

Betreiben Ziel- und Ref - WEA —— 411

Abfrage Betriebsergebnisse aus Ziel- und Ref - WEA —— 413

Berechnung Teil - Gütemaße $\Gamma_Z$
für Ziel- und $\Gamma_R$ für Ref - WEA —— 415

Berechnen Validierungsmaß $\dfrac{E_R(t2)}{E_R(t1)}$ —— 417

419

Schwelle
o.k.
?

nein

ja

Berechnen Haupt- Gütemaß $\left(\dfrac{\Gamma_Z}{\Gamma_R} -1\right)$
und Abspeichern —— 420

421

$\left|\dfrac{\Gamma_Z}{\Gamma_R} -1\right|$
$< \varepsilon$

nein

ja

423

Ende

# Fig. 9

**IN DER BESCHREIBUNG AUFGEFÜHRTE DOKUMENTE**

**In der Beschreibung aufgeführte Patentdokumente**

- DE 10127451 A
- DE 10137272 A
- US 4683718 A